# FASCICULE DE BREVET EUROPEEN

(11) **EP 3 391 585 B1**
(45) Date de publication et mention de la délivrance du brevet: **05.02.2020**
(21) Numéro de dépôt: 16819294.6
(22) Date de dépôt: 12.12.2016
(51) Int. Cl.: H04L 9/08

(54) **PROCÉDÉ DE SÉCURISATION D'UN ENREGISTREMENT DE CONTENU MULTIMÉDIA DANS UN SUPPORT DE STOCKAGE**
VERFAHREN ZUR SICHERUNG EINER AUFZEICHNUNG VON MULTIMEDIA-INHALTEN IN EINEM SPEICHERMEDIUM
METHOD FOR SECURING A RECORDING OF MULTIMEDIA CONTENT IN A STORAGE MEDIUM

(30) Priorité: 14.12.2015 FR 1562298
(43) Date de publication de la demande: 24.10.2018
(73) Titulaire: Sagemcom Broadband SAS, 92500 Rueil-Malmaison (FR)
(72) Inventeur: DESCHAMPS, Lionel, 92500 Rueil Malmaison (FR); BERGER, Jérôme, 92500 Rueil Malmaison (FR)
(74) Mandataire: Cabinet Camus Lebkiri
(86) Numéro de dépôt international: PCT/EP2016/080627
(87) Numéro de publication internationale: WO 2017/102644

(56) Documents cités:
- US-A- 6 085 323
- US-A1- 2003 070 082
- US-A1- 2010 296 655
- US-A1- 2013 007 464
- US-A1- 2014 059 356

## Description

### DOMAINE TECHNIQUE DE L'INVENTION

La présente invention a pour objet un procédé de sécurisation d'un enregistrement d'un contenu multimédia dans un support de stockage d'un dispositif électronique. Les dispositifs électroniques concernés par l'invention sont notamment de type décodeur de télévision numérique possédant des moyens de mémorisation tels qu'un ou plusieurs disques durs. Le support de stockage intervenant peut consister en ce ou ces disques durs du décodeur numérique, mais peuvent également être des supports de stockage amovibles du dispositif électronique.

Par contenu multimédia, on désigne tout élément numérique présentant des informations de type audio et/ou vidéo, notamment un flux de signaux de télévision reçu en direct ou bien déjà mémorisé, des photographies numériques, des contenus vidéo privés - par exemple déjà mémorisés sur un support particulier - des bandes sons...

Le domaine de l'invention est, d'une façon générale, celui de la sécurisation de l'accès à des contenus multimédia mémorisés sur un appareil électronique de type décodeur de télévision numérique.

### ARRIERE-PLAN TECHNOLOGIQUE DE L'INVENTION

Un principe connu, pour assurer une telle sécurisation, est l'utilisation, au sein d'un décodeur de télévision numérique, d'une clé racine unique, associée de manière spécifique à une puce électronique (chipset en langue anglaise) du décodeur considéré. Une telle clé sera désignée comme clé racine du décodeur de télévision numérique. La clé racine n'est pas accessible par le processeur principal du décodeur.

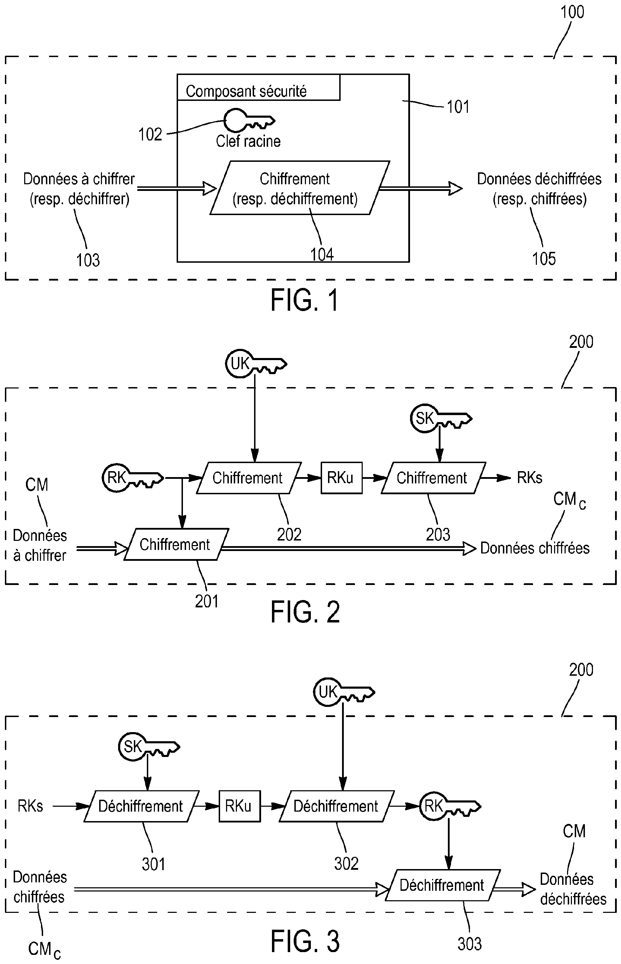

La figure 1 illustre l'utilisation d'une clé racine pour le chiffrement de données.

Sur cette figure, on a représenté un composant sécurisé 101 qui est, dans un décodeur de télévision numérique 100 au sein duquel il est installé, un composant matériel dédié à la sécurité. Le composant sécurisé 101 est le seul composant du décodeur à pouvoir lire une clé racine 102, qui pour sa part ne peut pas être lue ou accédée depuis l'extérieur du composant sécurisé 101. On dispose ainsi d'un véritable coffre-fort qui protège la clé racine 102.

Lorsque le décodeur 100 procède au chiffrement (respectivement au déchiffrement) d'un enregistrement, il transfère des données 103 à chiffrer (respectivement à déchiffrer) au composant sécurisé 101. Celui-ci procède alors à une opération 104 de chiffrement (respectivement déchiffrement) des données 103 au moyen de la clé racine 102 et transmet le résultat de chiffrement (respectivement de déchiffrement), sous la forme de données chiffrées (respectivement déchiffrées) 105 à l'extérieur du composant sécurisé 101. Ainsi, l'accès à l'enregistrement des données 103, une fois chiffrées, est rendu impossible à l'extérieur du décodeur 100 intégrant le composant sécurisé 101.

Cette solution permet un haut niveau de sécurité puisqu'il est impossible de déchiffrer des données protégées par le procédé qui vient d'être décrit sans connaître la clé racine 102, clé racine 102 à laquelle seul le composant sécurisé 101 peut accéder. Pour une récupération des données chiffrées, par exemple par un service après-vente, il est alors nécessaire de communiquer la clé racine de chaque décodeur de télévision numérique pour lequel on veut récupérer un contenu chiffré.

Un problème se pose alors : le personnel du service après-vente, ou toute personne ou entité de confiance disposant de la clé racine, peut accéder aux données non chiffrées, notamment lorsqu'elles effectuent un échange standard.

Par ailleurs, la solution décrite ne permet pas de relire un enregistrement chiffré sur un autre dispositif électronique, notamment sur un autre décodeur de télévision numérique, même si celui-ci appartient également au possesseur du dispositif électronique sur lequel ont été chiffrées les données.

Différentes solutions ont été proposées dans l'état de la technique pour améliorer la sécurité du chiffrement d'un contenu multimédia, et/ou pour rendre l'accès au contenu chiffré plus flexible pour des personnes autorisées, notamment pour les possesseurs d'un premier dispositif électronique au moyen duquel on a procédé au chiffrement du contenu multimédia.

On a par exemple proposé de réaliser les opérations de chiffrement avec une clé spécifique au contenu multimédia à chiffrer. Mais l'accès au contenu chiffré au moyen d'un autre décodeur de télévision n'est alors pas prévu. On a également proposé l'utilisation d'une clé racine de groupe commune, qui serait partagée par plusieurs décodeurs de télévision numérique. Mais la protection des données chiffrées est alors diminuée, puisqu'il suffit alors de casser (c'est-à-dire de découvrir comment accéder au contenu non chiffré) un seul des décodeurs de télévision numérique pour accéder aux contenus chiffrés de l'ensemble des autres décodeurs appartenant au même groupe.

Mais aucune solution de l'état de la technique ne permet d'assurer simultanément les attentes suivantes :
- Une flexibilité optimale, avec la possibilité offerte à un utilisateur d'accéder depuis une pluralité de dispositifs électroniques à un contenu multimédia chiffré.
- Une sécurité optimale, avec l'assurance que le contenu multimédia chiffré ne sera pas accessible, notamment ne sera pas lu, sur un appareil non autorisé.
- Une garantie optimale de la vie privée, avec la possibilité d'autoriser un tiers (par exemple un service après-vente) de dupliquer un enregistrement d'un contenu multimédia chiffré pour le transférer d'un premier décodeur de télévision numérique à un deuxième décodeur de télévision numérique, tout en empêchant ce tiers de lire l'enregistrement en clair, c'est-à-dire dans sa forme non chiffrée.
- Avantageusement, une simplicité du procédé de sécurisation mis en œuvre, en limitant l'importance des calculs à réaliser, et donc en limitant le volume de données à chiffrer et/ou à déchiffrer.

Le document US 6085323 intitulé « Information processing system having function of securely protecting confidential information » est connu de l'état de la technique.

### DESCRIPTION GENERALE DE L'INVENTION

Le procédé selon l'invention propose une solution aux problèmes et inconvénients qui viennent d'être exposés. Dans l'invention, on propose une solution pour donner aux contenus multimédia chiffrés au moyen d'un premier dispositif électronique, de la flexibilité en autorisant à d'autres appareils d'accéder à ces contenus multimédias tout en garantissant d'une part une sécurité optimale des contenus, des appareils non autorisés ne pouvant pas accéder à ces contenus, et une garantie optimale de la vie privée mentionnée ci-dessus. Avantageusement, on assure, dans l'invention, une mise en œuvre du procédé particulièrement simple et peu coûteuse en termes de capacité de calculs.

A cet effet, dans l'invention, on propose essentiellement un procédé de sécurisation d'un enregistrement d'un contenu multimédia dans un support de stockage d'un premier dispositif électronique, ledit procédé comportant une opération de chiffrement consistant à :
- pour chaque contenu multimédia à chiffrer, générer une clé aléatoire au sein du premier dispositif électronique ;
- chiffrer le contenu multimédia au moyen de la clé aléatoire pour obtenir un contenu multimédia chiffré ;
- chiffrer, au moyen d'une clé utilisateur, la clé aléatoire pour obtenir une première clé aléatoire chiffrée ;
- chiffrer la première clé aléatoire chiffrée au moyen d'une clé racine propre au premier dispositif électronique pour obtenir une deuxième clé aléatoire chiffrée ;
- mémoriser la deuxième clé aléatoire chiffrée et le contenu multimédia chiffré dans le support de stockage.

Le procédé selon l'invention peut comporter, en plus des étapes principales qui viennent d'être mentionnées dans le paragraphe précédent, une ou plusieurs caractéristiques supplémentaires parmi les suivantes:
- le procédé comporte une opération de déchiffrement consistant à :
   - déchiffrer la deuxième clé aléatoire chiffrée au moyen de la clé racine propre au premier dispositif électronique pour obtenir la première clé aléatoire chiffrée ;
   - déchiffrer la première clé aléatoire au moyen de la clé utilisateur pour obtenir la clé aléatoire ;
   - déchiffrer le contenu multimédia chiffré au moyen de la clé aléatoire pour obtenir le contenu multimédia non chiffré.
- le procédé comporte une opération d'accès au contenu multimédia par un deuxième dispositif électronique consistant à :
   * déchiffrer, au sein du premier dispositif électronique, la deuxième clé aléatoire chiffrée au moyen de la clé racine propre au premier dispositif électronique pour obtenir la première clé aléatoire chiffrée ;
   * établir une connexion sécurisée entre le premier dispositif électronique et le deuxième dispositif électronique ;
   * émettre, depuis le premier dispositif électronique vers le deuxième dispositif électronique, la première clé aléatoire chiffrée via la connexion sécurisée ;
   * émettre, depuis le premier dispositif électronique vers le deuxième dispositif électronique, le contenu multimédia chiffré ;
   * déchiffrer, au sein du deuxième dispositif électronique, la première clé aléatoire au moyen de la clé utilisateur pour obtenir la clé aléatoire ;
   * déchiffrer, au sein du deuxième dispositif électronique, le contenu multimédia chiffré au moyen de la clé aléatoire (RK) pour obtenir le contenu multimédia non chiffré.
- le contenu multimédia chiffré est émis depuis le premier dispositif électronique vers le deuxième dispositif électronique via la connexion sécurisée.
- la connexion sécurisée est établie par le protocole SSL/TLS.
- le procédé comporte une opération de transfert du contenu multimédia chiffré vers un troisième dispositif électronique consistant à :
   - déchiffrer, au sein du premier dispositif électronique, la deuxième clé aléatoire chiffrée au moyen de la clé racine propre au premier dispositif électronique pour obtenir la première clé aléatoire chiffrée ;
   - émette, depuis le premier dispositif électronique vers le troisième dispositif électronique la première clé aléatoire chiffrée et le contenu multimédia chiffré ;
   - au sein du troisième dispositif électronique, chiffrer la première clé aléatoire au moyen d'une clé racine propre au troisième dispositif électronique pour obtenir une deuxième clé aléatoire chiffrée modifiée ;
   - mémoriser la deuxième clé aléatoire chiffrée modifiée et le contenu multimédia chiffré dans un moyen de stockage du troisième dispositif électronique.
- la clé racine propre au premier dispositif électronique est obtenue au moyen d'une clé racine initiale du premier dispositif électronique, ladite clé racine initiale subissant, pour générer la clé racine, une cascade d'opérations de codage, chaque opération de codage étant réalisée au moyen d'une clé intermédiaire spécifique.
- la clé racine est protégée dans un composant sécurisé du premier dispositif électronique.
- le contenu multimédia est obtenu dans un flux de signaux de télévision reçu en direct par le premier dispositif électronique, ou déjà mémorisé au sein du premier dispositif électronique, ou des photographies numériques, ou des contenus vidéo privés ou des bandes sons.

Les différentes caractéristiques supplémentaires du procédé selon l'invention, dans la mesure où elles ne s'excluent pas mutuellement, sont combinées selon toutes les possibilités d'association pour aboutir à différents exemples de mise en œuvre de l'invention.

La présente invention se rapporte également à un dispositif électronique de type décodeur de télévision numérique caractérisé en ce qu'il est adapté pour mettre en œuvre le procédé selon l'un quelconque des modes de mise en œuvre de l'invention.

Un autre aspect de l'invention concerne un produit programme d'ordinateur comprenant des instructions qui, lorsque le programme est exécuté par un ordinateur, conduisent celui-ci à mettre en œuvre les étapes du procédé selon l'invention. En particulier, l'homme du métier reconnaîtra qu'un décodeur de télévision numérique est un exemple d'ordinateur. Cet aspect de l'invention concerne donc en particulier un produit programme d'ordinateur comprenant des instructions qui, lorsque le programme est exécuté par un décodeur de télévision numérique, conduisent celui-ci à mettre en œuvre les étapes du procédé selon l'invention.

Un autre aspect de l'invention concerne un support d'enregistrement lisible par un ordinateur, sur lequel est enregistré le produit programme d'ordinateur selon l'invention. Cet aspect de l'invention concerne en particulier un support d'enregistrement lisible par un décodeur de télévision numérique, sur lequel est enregistré le produit programme d'ordinateur selon l'invention.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention. Les figures montrent :
- à la figure 1, déjà décrite, une représentation schématique de l'utilisation d'une clé racine pour le chiffrement de données au sein d'un décodeur de télévision numérique.
- à la figure 2, un schéma fonctionnel illustrant un exemple de chiffrement d'un contenu multimédia par un exemple de mise en œuvre du procédé selon l'invention ;
- à la figure 3, un schéma fonctionnel illustrant un exemple de déchiffrement d'un contenu multimédia par un exemple de mise en œuvre du procédé selon l'invention ;
- à la figure 4, un schéma fonctionnel illustrant un accès, par un deuxième dispositif électronique, au contenu multimédia chiffré par un premier dispositif électronique, dans un exemple de mise en œuvre du procédé selon l'invention ;
- à la figure 5, un schéma fonctionnel illustrant un transfert, depuis un dispositif électronique vers un autre dispositif électronique, d'un contenu multimédia chiffré au sein du premier dispositif électronique, dans un exemple de mise en œuvre du procédé selon l'invention.

### DESCRIPTION DES FORMES DE REALISATION PREFEREES DE L'INVENTION

Les différents éléments apparaissant sur plusieurs figures auront gardé, sauf précision contraire, la même référence.

Sur la figure 2, on a représenté un schéma fonctionnel illustrant un exemple de chiffrement de données, correspondant à un contenu multimédia CM, grâce au procédé selon l'invention. Dans cet exemple, au sein d'un premier dispositif électronique 200 par exemple de type décodeur de télévision numérique, on procède successivement aux opérations suivantes :
- Génération d'une clef aléatoire RK pour chaque contenu multimédia CM à chiffrer ;
- Chiffrement 201 du contenu multimédia CM en utilisant la clef aléatoire RK pour obtenu un contenu multimédia chiffré CMc.
- Chiffrement 202 de la clef aléatoire RK pour obtenir une première clef aléatoire chiffrée RKu en utilisant une clef utilisateur UK. La clé utilisateur UK se matérialise par exemple par un code que choisit un utilisateur, ou bien encore une empreinte digitale, ou tout autre moyen personnalisé exploitable par les dispositifs mettant en œuvre le procédé selon l'invention. Ainsi seul l'utilisateur possesseur de la clef utilisateur RKu pourra déchiffrer ultérieurement le contenu multimédia chiffré CMc .
- Chiffrement 203 de la première clef aléatoire chiffrée RKu pour obtenir une deuxième clef aléatoire chiffrée RKs en utilisant la clef racine SK du premier dispositif électronique 200. Ainsi seul un appareil électronique autorisé, c'est-à-dire possesseur de la clé racine SK, pourra déchiffrer le contenu multimédia chiffré CMc.
- Mémorisation de la deuxième clef aléatoire chiffrée RKs avec le contenu multimédia chiffré CMc.

Avantageusement, afin d'augmenter le niveau de sécurité, les différentes opérations de chiffrement qui viennent d'être décrites sont réalisées par un composant sécurité du même type que celui présenté à la figure 1. De manière générale, les algorithmes de chiffrement utilisés peuvent être de n'importe quel type d'algorithmes symétriques (par exemple de type DES, 3DES, AES...).

L'utilisation de deux clefs successives, l'une spécifique à l'utilisateur et l'autre spécifique au dispositif électronique, permet d'obtenir un niveau de sécurité et de confidentialité accru. En effet :
- l'utilisateur ne pourra pas déchiffrer le contenu multimédia chiffré CMc sur un appareil non autorisé puisqu'il ne dispose pas de la clef racine ;
- le service après-vente, ou le tiers de confiance, qui détient la clef racine SK ne pourra pas déchiffrer le contenu multimédia chiffré CMc non plus puisqu'il ne possède pas la clef utilisateur UK.

Sur la figure 3, on a représenté un schéma fonctionnel illustrant un exemple de déchiffrement, selon une mise en œuvre du procédé selon l'invention, du contenu multimédia chiffré CMc, obtenu selon les opérations qui viennent d'être décrites. Dans cet exemple, au sein du premier dispositif électronique 200, on procède successivement aux opérations suivantes :
- Récupération de la deuxième clef aléatoire chiffrée RKs avec le contenu multimédia chiffré CMc.
- Déchiffrement 301 de la deuxième clef aléatoire chiffrée RKs pour obtenir la première clef aléatoire chiffrée RKu en utilisant la clef racine SK du premier dispositif électronique 200.
- Déchiffrement 302 de la première clef aléatoire chiffrée RKu pour obtenir la clef aléatoire RK en utilisant la clef utilisateur UK.
- Déchiffrement 303 du contenu multimédia chiffré CMc en utilisant la clef aléatoire RK pour obtenir le contenu multimédia CM non chiffré.

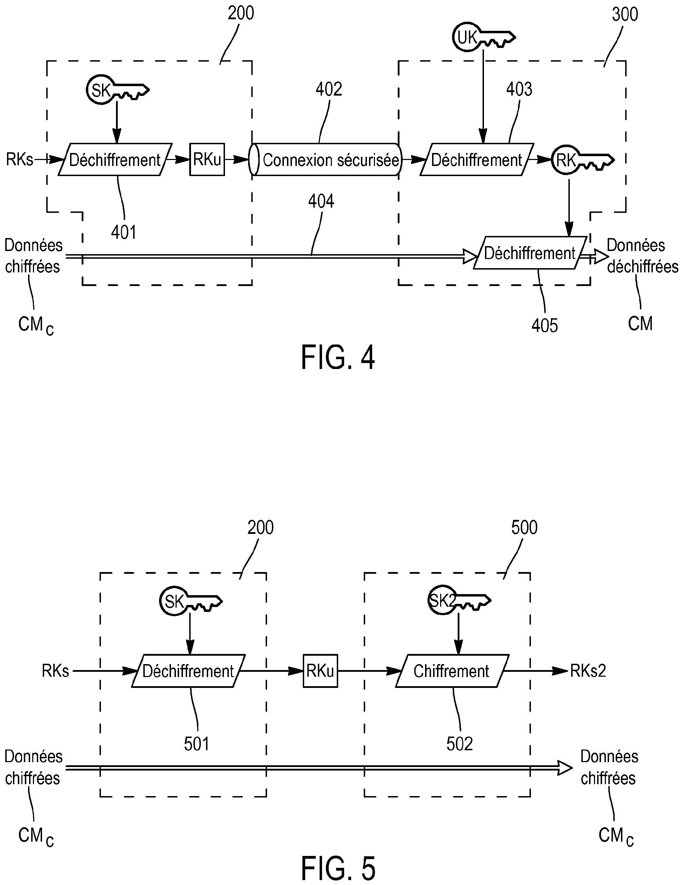

Sur la figure 4, on a représenté un schéma fonctionnel illustrant un exemple de visualisation, selon une mise en œuvre du procédé selon l'invention, du contenu multimédia CM chiffré par le premier dispositif électronique 200, la visualisation étant réalisée sur un deuxième dispositif électronique 300.

Dans cet exemple, on procède successivement aux opérations suivantes :
- Récupération, au sein du premier dispositif électronique 200, de la deuxième clef aléatoire chiffrée RKs avec le contenu multimédia chiffré CMc.
- Déchiffrement 401 de la deuxième clef aléatoire chiffrée RKs pour obtenir la première clef aléatoire chiffrée RKu en utilisant la clef racine SK du premier dispositif électronique 200.
- Etablissement d'une connexion sécurisée 402 entre le premier dispositif électronique 200 et le deuxième dispositif électronique 300, par exemple grâce au protocole SSL/TLS
- Transmission de la première clef aléatoire chiffrée RKu au deuxième dispositif électronique 300 par la connexion sécurisée 402.
- Transmission du contenu multimédia chiffré CMc au deuxième dispositif électronique 300 par la connexion sécurisée 402. Dans une variante avantageuse, le contenu multimédia chiffré CMc est transmis vers le deuxième dispositif électronique 300 par tout autre moyen. Comme le contenu multimédia CMc est déjà chiffré, il n'est pas nécessaire de l'envoyer par la liaison sécurisée 402 ; une liaison sécurisée impliquant des étapes supplémentaires de chiffrement et de déchiffrement coûteuses en calcul, on réalise ainsi des économies substantielles en terme de calcul.

Les étapes suivantes sont réalisées au sein du deuxième dispositif électronique 300:
- Réception de la première clef aléatoire chiffrée RKu depuis le premier dispositif électronique 200 par la connexion sécurisée 402.
- Déchiffrement 403 de la première clef aléatoire chiffrée RKu pour obtenir la clef aléatoire RK en utilisant la clef utilisateur UK.
- Réception 404 du contenu multimédia chiffré CMc depuis le premier dispositif électronique 200.
- Déchiffrement 405 de l'enregistrement en utilisant la clef aléatoire RK pour obtenir le contenu multimédia non chiffré CM.

Ainsi il n'est pas nécessaire de trans-chiffrer les données.

La connexion entre les deux dispositifs électroniques étant sécurisée, l'utilisateur ne peut pas récupérer la clef aléatoire chiffrée RKu et ne peut donc pas déchiffrer le contenu multimédia sur un autre appareil.

Sur la figure 5, on a représenté un schéma fonctionnel illustrant un exemple de transfert, selon une mise en œuvre du procédé selon l'invention, du contenu multimédia CMc chiffré par le premier dispositif électronique 200, vers un troisième dispositif électronique 500.

On considère ici l'exemple d'un service après-vente qui a besoin de transférer un contenu multimédia chiffré CMc depuis le premier dispositif électronique 200 vers un troisième dispositif électronique 500. Les opérations suivantes sont alors réalisées:
- Récupération de la deuxième clef aléatoire chiffrée RKs avec le contenu multimédia chiffré CMc.
- Déchiffrement 501, au sein du premier dispositif électronique 200, de la deuxième clef aléatoire chiffrée RKs pour obtenir la première clef aléatoire chiffrée RKu en utilisant la clef racine SK du premier dispositif électronique 200.
- Chiffrement 502, au sein du troisième dispositif électronique 500, de la première clef aléatoire chiffrée RKu pour obtenir une deuxième clef aléatoire chiffrée RKs2 modifiée, en utilisant une clef racine SK2 propre au troisième dispositif électronique 500.
- Copie, du contenu multimédia chiffré CMc du premier dispositif électronique 200 vers le troisième dispositif électronique 500.
- On peut alors mémoriser la deuxième clef aléatoire chiffrée RKs2, adaptée au troisième dispositif électronique 500 avec le contenu multimédia chiffré CMc.

Là non plus, il n'est pas nécessaire de trans-chiffrer les données multimédia.

Généralement, le service après-ventes ne dispose pas lui-même des clefs racines SK et SK2 du premier dispositif électronique 200 et du troisième dispositif électronique 500. Ces clefs sont conservées par un tiers de confiance spécialiste en sécurité et le service après-vente doit envoyer les données à trans-chiffrer audit tiers de confiance. Dans l'état de l'art, les données à trans-chiffrer sont les données multimédia, qui représentent un volume important. Avantageusement, selon l'invention les données envoyées ont un volume très faible (typiquement quelques octets) puisqu'il s'agit de transmettre uniquement une clef dans chaque sens (RKs et RKs2 respectivement). Par ailleurs, ni le SAV ni le tiers de confiance ne peuvent déchiffrer les contenus multimédia chiffrés puisqu'ils ne sont pas en possession de la clé utilisateur UK.

## Revendications

1. Procédé de sécurisation d'un enregistrement d'un contenu multimédia (CM) dans un support de stockage d'un premier dispositif électronique (200), ledit procédé comportant une opération de chiffrement consistant à :
• pour chaque contenu multimédia (CM) à chiffrer, générer une clé aléatoire (RK) au sein du premier dispositif électronique (200) ;
• chiffrer le contenu multimédia (CM) au moyen de la clé aléatoire (RK) pour obtenir un contenu multimédia chiffré (CMc);
• chiffrer, au moyen d'une clé utilisateur (UK), la clé aléatoire (RK) pour obtenir une première clé aléatoire chiffrée (Rku) ;
• chiffrer la première clé aléatoire chiffrée (RKu) au moyen d'une clé racine (SK) propre au premier dispositif électronique (200) pour obtenir une deuxième clé aléatoire chiffrée (RKs) ;
• mémoriser la deuxième clé aléatoire chiffrée (RKs) et le contenu multimédia chiffré (CMc) dans le support de stockage.

2. Procédé de sécurisation d'un enregistrement d'un contenu multimédia dans un support de stockage d'un premier dispositif électronique (200), le support de stockage mémorisant la deuxième clé aléatoire chiffrée (RKs) et le contenu multimédia chiffré (CMc) obtenus par l'opération de chiffrement du procédé selon la revendication précédente, ledit procédé comportant une opération de déchiffrement consistant à :
• déchiffrer la deuxième clé aléatoire chiffrée (RKs) au moyen de la clé racine (SK) propre au premier dispositif électronique (200) pour obtenir la première clé aléatoire chiffrée (RKu) ;
• déchiffrer la première clé aléatoire (RKu) au moyen de la clé utilisateur (UK) pour obtenir la clé aléatoire (RK) ;
• déchiffrer le contenu multimédia chiffré (CMc) au moyen de la clé aléatoire (RK) pour obtenir le contenu multimédia (CM) non chiffré.

3. Procédé de sécurisation d'un enregistrement d'un contenu multimédia dans un support de stockage d'un premier dispositif électronique (200), le support de stockage mémorisant la deuxième clé aléatoire chiffrée (RKs) et le contenu multimédia chiffré (CMc) obtenus par l'opération de chiffrement du procédé selon la revendication 1, ledit procédé comportant une opération d'accès au contenu multimédia par un deuxième dispositif électronique (300) consistant à :
• déchiffrer, au sein du premier dispositif électronique (200), la deuxième clé aléatoire chiffrée (RKs) au moyen de la clé racine (SK) propre au premier dispositif électronique (200) pour obtenir la première clé aléatoire chiffrée (RKu) ;
• établir une connexion sécurisée entre le premier dispositif électronique (200) et le deuxième dispositif électronique (300) ;
• émettre, depuis le premier dispositif électronique (200) vers le deuxième dispositif électronique (300), la première clé aléatoire chiffrée (RKu) via la connexion sécurisée ;
• émettre, depuis le premier dispositif électronique (200) vers le deuxième dispositif électronique (300), le contenu multimédia chiffré (CMc)
• déchiffrer, au sein du deuxième dispositif électronique (300), la première clé aléatoire (RKu) au moyen de la clé utilisateur (UK) pour obtenir la clé aléatoire (RK) ;
• déchiffrer, au sein du deuxième dispositif électronique (300), le contenu multimédia chiffré (CMc) au moyen de la clé aléatoire (RK) pour obtenir le contenu multimédia (CM) non chiffré.

4. Procédé selon la revendication précédente **caractérisé en ce que** le contenu multimédia chiffré (CMc) est émis depuis le premier dispositif électronique (200) vers le deuxième dispositif électronique (300) via la connexion sécurisée.

5. Procédé selon l'une quelconque des revendications 3 ou 4 **caractérisé en ce que** la connexion sécurisée est établie par le protocole SSL/TLS.

6. Procédé de sécurisation d'un enregistrement d'un contenu multimédia dans un support de stockage d'un premier dispositif électronique (200), le support de stockage mémorisant la deuxième clé aléatoire chiffrée (Rks) et le contenu multimédia chiffré (CMc) obtenus par l'opération de chiffrement du procédé selon la revendication 1, ledit procédé comportant une opération de transfert du contenu multimédia chiffré (CMc) vers un troisième dispositif électronique (500) consistant à :
• déchiffrer, au sein du premier dispositif électronique (200), la deuxième clé aléatoire chiffrée (RKs) au moyen de la clé racine (SK) propre au premier dispositif électronique (200) pour obtenir la première clé aléatoire chiffrée (RKu) ;
• émette, depuis le premier dispositif électronique (200) vers le troisième dispositif électronique (500) la première clé aléatoire chiffrée et le contenu multimédia chiffré (CMc) ;
• au sein du troisième dispositif électronique (500), chiffrer la première clé aléatoire (RKu) au moyen d'une clé racine (SK2) propre au troisième dispositif électronique (500) pour obtenir une deuxième clé aléatoire chiffrée modifiée (RKs2) ;
• mémoriser la deuxième clé aléatoire chiffrée modifiée (RKs2) et le contenu multimédia chiffré (CMc) dans un moyen de stockage du troisième dispositif électronique (500).

7. Procédé selon l'une quelconque des revendications précédentes **caractérisé en ce que** la clé racine (SK) est protégée dans un composant sécurisé du premier dispositif électronique (200).

8. Procédé selon l'une quelconque des revendications précédentes **caractérisé en ce que** le contenu multimédia est obtenu dans un flux de signaux de télévision reçu en direct par le premier dispositif électronique (200), ou déjà mémorisé au sein du premier dispositif électronique (200), ou des photographies numériques, ou des contenus vidéo privés ou des bandes sons.

9. Produit programme d'ordinateur comprenant des instructions qui, lorsque le programme est exécuté par ordinateur, conduisent celui-ci à mettre en œuvre les étapes du procédé selon l'une quelconque des revendications 1 ou 2.

10. Support d'enregistrement lisible par un ordinateur, sur lequel est enregistré le produit programme d'ordinateur selon la revendication 9.

11. Dispositif électronique de type décodeur de télévision numérique **caractérisé en ce qu'**il est adapté pour mettre en œuvre le procédé selon l'une quelconque des revendications 1 à 8.

## Patentansprüche

1. Sicherungsverfahren einer Aufzeichnung eines Multimedien-Inhaltes (CM) auf einem Speicherträger einer ersten elektronischen Vorrichtung (200), wobei das genannte Verfahren eine Verschlüsselungsoperation umfasst, bestehend aus:
• Erzeugen eines zufälligen Schlüssels (RK) innerhalb der ersten elektronischen Vorrichtung (200) für jeden zu verschlüsselnden Multimedien-Inhalt (CM);
• Verschlüsseln des Multimedien-Inhaltes (CM) mittels des zufälligen Schlüssels (RK), um einen verschlüsselten Multimedieninhalt (CMc) zu erhalten;
• Verschlüsseln des zufälligen Schlüssels (RK) mittels eines Nutzerschlüssels (UK), um einen ersten zufälligen Schlüssel (Rku) zu erhalten;
• Verschlüsseln des ersten zufälligen verschlüsselten Schlüssels (Rku) mittels eines der ersten elektronischen Vorrichtung (200) eigenen Root Keys (SK), um einen zweiten zufälligen verschlüsselten Schlüssel (RKs) zu erhalten;
• Speichern des zweiten zufälligen verschlüsselten Schlüssels (RKs) und des verschlüsselten Multimedien-Inhaltes (CMs) auf dem Speicherträger.

2. Sicherungsverfahren einer Aufzeichnung eines Multimedien-Inhaltes (CM) auf einem Speicherträger einer ersten elektronischen Vorrichtung (200), wobei der Speicherträger den zweiten zufälligen verschlüsselten Schlüssel (RKs) und den verschlüsselten Multimedien-Inhalt (CMs) speichert, die durch die Verschlüsselungsoperation des Verfahrens gemäß dem voranstehenden Anspruch erhalten werden, wobei das genannte Verfahren eine Entschlüsselungsoperation umfasst, bestehend aus:
• Entschlüsseln des zweiten zufälligen verschlüsselten Schlüssels (RKs) mittels des der ersten elektronischen Vorrichtung (200) eigenen Root Keys (SK), um den ersten zufälligen verschlüsselten Schlüssel (RKu) zu erhalten;
• Entschlüsseln des ersten zufälligen Schlüssels (RKu) mittels des Nutzerschlüssels (UK), um den zufälligen Schlüssel (RK) zu erhalten;
• Entschlüsseln des verschlüsselten Multimedien-Inhaltes (CMC) mittels des zufälligen Schlüssels (RK), um den nicht verschlüsselten Multimedien-Inhalt (CM) zu erhalten.

3. Sicherungsverfahren einer Aufzeichnung eines Multimedien-Inhaltes auf einem Speicherträger einer ersten elektronischen Vorrichtung (200), wobei der Speicherträger den zweiten zufälligen, verschlüsselten Schlüssel (RKs) und den verschlüsselten Multimedieninhalt (CMc) speichert, die von der Verschlüsselungsoperation des Verfahrens gemäß Anspruch 1 erhalten werden, wobei das genannte Verfahren eine Zugriffsoperation auf den Multimedieninhalt durch eine zweite elektronische Vorrichtung (300) umfasst, bestehend aus:
• Entschlüsseln des zweiten zufälligen verschlüsselten Schlüssels (RKs) mittels des der ersten elektronischen Vorrichtung (200) eigenen Root Keys (SK) innerhalb der ersten elektronischen Vorrichtung (200), um den ersten zufälligen verschlüsselten Schlüssel (RKu) zu erhalten;
• Herstellen einer gesicherten Verbindung zwischen der ersten elektronischen Vorrichtung (200) und der zweiten elektronischen Vorrichtung (300);
• Ausgeben des ersten zufälligen verschlüsselten Schlüssels (RKu) über die gesicherte Verbindung ausgehend von der ersten elektronischen Vorrichtung (200) an die zweite elektronische Vorrichtung (300);
• Ausgeben des verschlüsselten Multimedien-Inhaltes (CMc) ausgehend von der ersten elektronischen Vorrichtung (200) an die zweite elektronische Vorrichtung (300);
• Entschlüsseln des ersten zufälligen Schlüssels (RKu) mittels des Nutzerschlüssels (UK) innerhalb der zweiten elektronischen Vorrichtung (300), um den zufälligen Schlüssel (RK) zu erhalten,
• Entschlüsseln des verschlüsselten Multimedien-Inhaltes (CMc) mittels des zufälligen Schlüssels (RK) innerhalb der zweiten elektronischen Vorrichtung (300), um den nicht verschlüsselten Multimedien-Inhalt (CM) zu erhalten.

4. Verfahren gemäß dem voranstehenden Anspruch, **dadurch gekennzeichnet, dass** der verschlüsselte Multimedien-Inhalt (CMc) ausgehend von der ersten elektronischen Vorrichtung (200) an die zweite elektronische Vorrichtung (300) über die gesicherte Verbindung ausgegeben wird.

5. Verfahren gemäß irgendeinem der Ansprüche 3 oder 4, **dadurch gekennzeichnet, dass** die gesicherte Verbindung durch das Protokoll SSL/TLS gesichert wird.

6. Sicherungsverfahren einer Aufzeichnung eines Multimedien-Inhaltes auf einem Speicherträger einer ersten elektronischen Vorrichtung (200), wobei der Speicherträger den zweiten zufälligen, verschlüsselten Schlüssel (RKs) und den verschlüsselten Multimedieninhalt (CMs) speichert, die von der Verschlüsselungsoperation des Verfahrens gemäß Anspruch 1 erhalten werden, wobei das genannte Verfahren eine Übertragungsoperation des verschlüsselten Multimedien-Inhaltes (CMc) auf eine dritte elektronische Vorrichtung (500) umfasst, bestehend aus:
• Entschlüsseln des zweiten zufälligen Schlüssels (RKs) mittels des der ersten elektronischen Vorrichtung (200) eigenen Root Keys innerhalb der ersten elektronischen Vorrichtung (200), um den ersten zufälligen verschlüsselten Schlüssel (RKu) zu erhalten;
• Ausgeben des ersten zufälligen verschlüsselten Schlüssels und des verschlüsselten Multimedien-Inhaltes (CMc) ausgehend von der ersten elektronischen Vorrichtung (200) zur dritten elektronischen Vorrichtung (500) ;
• Verschlüsseln des ersten zufälligen Schlüssels (RKu) mittels eines der dritten elektronischen Vorrichtung (500) eigenen Root Keys (SK2) innerhalb der dritten elektronischen Vorrichtung (500), um einen zweiten zufälligen verschlüsselten modifizierten Schlüssel (RKs2) zu erhalten;
• Speichern des zweiten zufälligen verschlüsselten modifizierten Schlüssels (RKs2) und des verschlüsselten Multimedien-Inhaltes (CMc) in einem Speichermittel der dritten elektronischen Vorrichtung (500).

7. Verfahren gemäß irgendeinem der voranstehenden Ansprüche, **dadurch gekennzeichnet, dass** der Root Key (SK) in einem gesicherten Bauteil der ersten elektronischen Vorrichtung (200) geschützt ist.

8. Verfahren gemäß irgendeinem der voranstehenden Ansprüche, **dadurch gekennzeichnet, dass** der Multimedien-Inhalt in einem Fernsehsignal-Fluss, der live von der ersten elektronischen Vorrichtung (200) empfangen wird oder bereits innerhalb der ersten elektronische Vorrichtung (200) gespeichert ist, oder digitalen Fotografien oder privaten Videoinhalten oder Tonträgern erhalten wird.

9. Computerprogramm-Produkt, umfassend Anweisungen, die, wenn das Programm per Computer ausgeführt wird, dieses veranlassen, die Schritte des Verfahrens gemäß irgendeinem der Ansprüche 1 oder 2 auszuführen.

10. Computerlesbarer Speicherträger, auf dem das Computerprogramm-Produkt gemäß Anspruch 9 gespeichert ist.

11. Elektronische Vorrichtung vom Typ digitaler Fernsehkodierer, **dadurch gekennzeichnet, dass** sie geeignet ist, um das Verfahren gemäß irgendeinem der Ansprüche 1 bis 8 umzusetzen.

## Claims

1. A method for securing a recording of a multimedia content (CM) in a storage medium of a first electronic device (200), said method including an encrypting operation consisting in:
• for each multimedia content (CM) to be encrypted, generating a random key (RK) within the first electronic device (200);
• encrypting the multimedia content (CM) by means of the random key (RK) to obtain an encrypted multimedia content (CMc);
• encrypting, by means of a user key (UK), the random key (RK) to obtain a first encrypted random key (Rku);
• encrypting the first encrypted random key (RKu) by means of a root key (SK) specific to the first electronic device (200) to obtain a second encrypted random key (RKs);
• storing the second encrypted random key (RKs) and the encrypted multimedia content (CMc) in the storage medium.

2. The method for securing a recording of a multimedia content in a storage medium of a first electronic device (200), the storage medium storing the second encrypted random key (RKs) and the encrypted multimedia content (CMc) obtained by the encrypting operation of the method according to the previous claim, said method including a decrypting operation consisting in:
• decrypting the second encrypted random key (RKs) by means of the root key (SK) specific to the first electronic device (200) to obtain the first encrypted random key (RKu);
• decrypting the first random key (RKu) by means of the user key (UK) to obtain the random key (RK);
• decrypting the encrypted multimedia content (CMc) by means of the random key (RK) to obtain the non-encrypted multimedia content (CM).

3. The method for securing a recording of a multimedia content in a storage medium of a first electronic device (200), the storage medium storing the second encrypted random key (RKs) and the encrypted multimedia content (CMc) obtained by the encrypting operation of the method according to claim 1, said method including an access operation to the multimedia content by a second electronic device (300) consisting in:
• decrypting, within the first electronic device (200), the second encrypted random key (RKs) by means of the root key (SK) specific to the first electronic device (200) to obtain the first encrypted random key (RKu);
• setting up a secured connection between the first electronic device (200) and the second electronic device (300);
• transmitting, from the first electronic device (200) to the second electronic device (300), the first encrypted random key (RKu) via the secured connection;
• transmitting, from the first electronic device (200) to the second electronic device (300), the encrypted multimedia content (CMc);
• decrypting, within the second electronic device (300), the first random key (RKu) by means of the user key (UK) to obtain the random key (RK);
• decrypting, within the second electronic device (300), the encrypted multimedia content (CMc) by means of the random key (RK) to obtain the non-encrypted multimedia content (CM).

4. The method according to the previous claim, **characterised in that** the encrypted multimedia content (CMc) is transmitted from the first electronic device (200) to the second electronic device (300) via the secured connection.

5. The method according to any of claims 3 and 4, **characterised in that** the secured connection is set up through the SSL/TLS protocol.

6. The method for securing a recording of a multimedia content in a storage medium of a first electronic device (200), the storage medium storing the second encrypted random key (RKs) and the encrypted multimedia content (CMc) obtained by the encrypting operation of the method according to claim 1, said method including a transfer operation of the encrypted multimedia content (CMc) to a third electronic device (500) consisting in:
• decrypting, within the first electronic device (200), the second encrypted random key (RKs) by means of the root key (SK) specific to the first electronic device (200) to obtain the first encrypted random key (RKu);
• transmitting, from the first electronic device (200) to the third electronic device (500), the first encrypted random key and the encrypted multimedia content (CMc);
• within the third electronic device (500), encrypting the first random key (RKu) by means of a root key (SK2) specific to the third electronic device (500) to obtain a second modified encrypted random key (RKs2);
• storing the second modified encrypted random key (RKs2) and the encrypted multimedia content (CMc) in a storage means of the third electronic device (500).

7. The method according to any of the previous claims, **characterised in that** the root key (SK) is protected in a secured component of the first electronic device (200).

8. The method according to any of the previous claims, **characterised in that** the multimedia content is obtained in a stream of television signals received live by the first electronic device (200), or already stored within the first electronic device (200), or digital photographs, or private video contents or audio types.

9. A computer program product comprising instructions which, when the program is executed by computer, lead the latter to implement the steps of the method according to any of claims 1 and 2.

10. A computer readable recording medium, on which the computer program product according to claim 9 is recorded.

11. A digital set top box type electronic device **characterised in that** it is adapted to implement the method according to any of claims 1 to 8.
